# EUROPÄISCHE PATENTSCHRIFT

(11) **EP 3 335 405 B1**
(45) Veröffentlichungstag und Bekanntmachung des Hinweises auf die Patenterteilung: **17.10.2018**
(21) Anmeldenummer: 17794241.4
(22) Anmeldetag: 17.10.2017
(51) Int. Cl.: H04M 1/2745, H04M 1/60

(54) **VERFAHREN ZUM VERARBEITEN EINER BENUTZEREINGABE UND KRAFTFAHRZEUG MIT EINER DATENVERARBEITUNGSEINRICHTUNG**
METHOD FOR PROCESSING A USER INPUT AND MOTOR VEHICLE HAVING A DATA-PROCESSING DEVICE
PROCÉDÉ DE TRAITEMENT D'UNE ENTRÉE UTILISATEUR ET VÉHICULE AUTOMOBILE COMPORTANT UN DISPOSITIF DE TRAITEMENT DE DONNÉES

(30) Priorität: 02.11.2016 DE 102016221466
(43) Veröffentlichungstag der Anmeldung: 20.06.2018
(73) Patentinhaber: Audi AG, 85045 Ingolstadt (DE)
(72) Erfinder: ENGELHARDT, Doreen, 85049 Ingolstadt (DE)
(86) Internationale Anmeldenummer: PCT/EP2017/076510
(87) Internationale Veröffentlichungsnummer: WO 2018/082917

(56) Entgegenhaltungen:
- DE-A1- 10 042 983
- DE-A1- 19 933 524
- DE-A1-102008 021 954

## Beschreibung

Die vorliegende Erfindung betrifft ein Verfahren gemäß dem Oberbegriff von Patentanspruch 1 zum Verarbeiten einer Benutzereingabe und ein Kraftfahrzeug gemäß dem Oberbegriff von Patentanspruch 7. Aus der DE 199 33 524 A1 ist ein Verfahren zur Eingabe von Daten in ein System bekannt, bei dem auf eine Eingabe eines Benutzers hin möglichst genau passende Begriffe ermittelt werden, zu jedem dieser Begriffe ein Zuverlässigkeitswert festgestellt und unter Berücksichtigung ihrer Zuverlässigkeitswerte die einer Eingabe zugeordneten Begriffe weiter behandelt werden. Der Wahrscheinlichkeitswert beschreibt eine Wahrscheinlichkeit einer erneuten Verwendung eines Datensatzes und entspricht dem Verhältnis der Anzahl von Verwendungen dieses Datensatzes relativ zu der Gesamtzahl von Verwendungen aller Datensätze. Werden mehrere Begriffe erkannt, so ist es vorgesehen, dass eine Ansage/Anzeigereihenfolge für die Datensätze in Abhängigkeit von ihren Wahrscheinlichkeitswerte und dem Zuverlässigkeitswert des zugeordneten Begriffs festgelegt wird. Die erkannten Begriffe oder gefundenen Datensätze können zur Bestätigung oder Auswahl angesagt und/oder angezeigt werden. Insgesamt soll eine Eingabe von Daten für den Benutzer erleichtert werden.

Die DE 10 2010 026 708 A1 offenbart ein Verfahren zum Betreiben eines Sprachdialogsystems und ein Sprachdialogsystem. Bei dem Verfahren ist es vorgesehen, dass Spracheingaben mit Einträgen von in einer Datenbank gespeicherten Datensätzen verglichen werden. In einem ersten Vergleich wird eine zweite Spracheingabe mit den Einträgen der Datensätze verglichen oder es wird eine erste Teilmenge der Datensätze identifiziert. In einem zweiten Vergleich wird eine zuvor gespeicherte erste Spracheingabe mit der Teilmenge der Datensätze verglichen und in Abhängigkeit von diesem zweiten Vergleich wird aus der Teilmenge eine Treffermenge ermittelt. Bei der Ermittlung der Treffermenge kann ein Übereinstimmungsmaß oder Konfidenzmaß definiert werden, wobei die Treffermenge den Datensatz oder die Datensätze mit der größten Übereinstimmung umfasst. Der oder die Treffer können auf einer Anzeigefläche dargestellt werden. Es kann durch eine zweite Spracheingabe eine zuvor ausgewählte Teilmenge bestätigt werden und bei immer wiederkehrenden Bedienaktionen über das Sprachdialogsystem kann dadurch vorteilhafterweise auf in der Vergangenheit ausgewählte Teilmengen zurückgegriffen werden.

Die DE 10 2009 010 275 A1 beschreibt eine Informationsgewinnungsvorrichtung, ein Informationsgewinnungssystem und ein Informationsgewinnungsverfahren. Die Informationsgewinnungsvorrichtung umfasst eine Eingabeeinheit für die Eingabe von Zeichen, eine Datenbank zum Speichern von Namen und mit diesen verbundenen Attributwörtern und eines Relevanzgrades, der jeweils den Grad der Relevanz zwischen einem Namen und einem Attributwort angeht. Die Namen können ausgelesen und als Kandidatennamen ausgegeben werden. Es können auch die von den Kandidatennamen extrahierten Attributwörter ausgegeben werden. Der Relevanzgrad eines Kandidatennamens wird hinsichtlich einer Kombination von extrahierten Attributwörtern bestimmt. Weiterhin werden ein Unabhängigkeitsgrad, der den Grad des Unterschieds zwischen den extrahierten Attributwörtern angibt, und ein Abdeckungsgrad berechnet, der das Ausmaß angibt, in dem die Kombination die Kandidatennamen abdeckt. Ein ebenfalls berechneter Gleichheitsgrad gibt die Gleichmäßigkeit einer Anzahl von Kandidatennamen für jedes Attributwort an. Schließlich wird eine Punktezahl für die Kombination von Attributwörtern berechnet und die Kombinationen der Attributwörter werden mit absteigender Größe der Punktzahlen an die Ausgabeeinheit ausgegeben. Bei der Aktualisierung des Relevanzgrades kann eine Häufigkeit der Auswahl eines POI-Namens (Point of Interest) durch den Benutzer berücksichtigt werden.

Die US 2011 / 0 276 330 A1 beschreibt ein Verfahren zum Ergänzen einer Adressliste und zum Bestimmen eines Kommunikationsprofils. Dabei kann eine Adressliste von einem anderen Gerät heruntergeladen werden. Diese Adressliste kann mit einer gespeicherten Kommunikations-Adresse zu einer gemeinsamen Adressliste kombiniert werden. Auf eine Benutzereingabe hin kann ein erster Kontakt aus der kombinierten Adressliste ausgegeben werden. Bei entsprechender Sortierung kann dies beispielsweise der am häufigsten angerufene Kontakt sein.

Aus der US 2014 / 0 173 515 A1 ist ein Verfahren zum Identifizieren und Anzeigen eines Satzes von priorisierten Kontakten bekannt. Darin kann gemäß einer Ausführungsform ein bestimmter Kontakt als priorisierter Kontakt identifiziert werden, wenn eine absolute Anruffrequenz oder -häufigkeit für diesen bestimmten Kontakt größer als ein fester Wert X ist.

Die DE 10 2014 010 305 A1 beschreibt eine Verwaltung eines Anrufjournals. Aus dessen Journaleinträgen können Listeneinträge abgeleitet werden, die wiederum in einer Anzeigeliste bereitgestellt werden können. Die Reihenfolge der Listeneinträge kann anhand unterschiedlicher Kriterien bestimmt werden. Ein mögliches Kriterium ist dabei eine jeweilige bisherige Häufigkeit der Kontaktaufnahme mit einem bestimmten Kommunikationspartner, der einem bestimmten Journaleintrag zugeordnet ist. Auch kann beispielsweise abhängig von einer aktuellen Zeit, einem aktuellen Ort oder einer aktuellen Umgebungsinformation für einen bestimmten Kontakt eine Wahrscheinlichkeit dafür berechnet werden, dass ein Anruf zu oder von einem bestimmten Kommunikationsgerät ausgehen beziehungsweise eingehen wird. Diese Wahrscheinlichkeit kann ebenfalls für eine Sortierung der Kontakte verwendet werden.

Aufgabe der vorliegenden Erfindung ist es, ein Verfahren und ein Kraftfahrzeug bereitzustellen, welche eine besonders effiziente Bedienbarkeit bieten.

Diese Aufgabe wird erfindungsgemäß durch die unabhängigen Patentansprüche gelöst. Weitere Merkmale, Einzelheiten und Ausgestaltungen der Erfindung sind in der nachfolgenden Beschreibung und in den abhängigen Patentansprüchen angegeben.

Bei dem erfindungsgemäßen Verfahren zum Verarbeiten einer Benutzereingabe wird mittels einer Datenverarbeitungseinrichtung eines Fahrzeugs eine Auswertung der Benutzereingabe durchgeführt und basierend auf einem Ergebnis der Auswertung aus einer Obermenge von personenbezogenen Datensätzen eine zu der Benutzereingabe passende Teilmenge ausgewählt. Weiterhin wird mittels der Datenverarbeitungseinrichtung für jeden Datensatz der Teilmenge ein Häufigkeitswert bestimmt, welcher einer Anzahl von bisherigen Verwendungen des Datensatzes entspricht. Anschließend wird mittels einer Ausgabeeinrichtung des Fahrzeugs die Teilmenge von Datensätzen angepasst an die bestimmten Häufigkeitswerte an den Benutzer ausgegeben. Das Anpassen der Teilmenge von Datensätzen an die bestimmten Häufigkeitswerte kann ebenfalls von der Datenverarbeitungseinrichtung durchgeführt werden und es kann beispielsweise ein Festlegen einer Ausgabe- und/oder Anzeigereihenfolge der Datensätze der Teilmenge umfassen.

Um eine besonders effiziente Bedienbarkeit zu bieten, ist es erfindungsgemäß vorgesehen, dass die Obermenge von Datensätzen vor der Auswahl der Teilmenge von einem von dem Fahrzeug verschiedenen mobilen Endgerät abgerufen und in einer Speichereinrichtung des Fahrzeugs gespeichert wird. Zur Anpassung der Ausgabe an den Benutzer werden die bestimmten Häufigkeitswerte der Datensätze der Teilmenge hinsichtlich eines vorbestimmten Auswahlkriteriums überprüft. Ist das Auswahlkriterium erfüllt, so wird derjenige Datensatz mit dem größten Häufigkeitswert aus der Teilmenge als VIP-Datensatz bestimmt und bei der Ausgabe an den Benutzer markiert und/oder vorausgewählt. Als personenbezogener Datensatz kann hier auch ein beispielsweise auf eine Organisation oder ein Unternehmen bezogener Datensatz verstanden werden. In jedem Fall können die Datensätze insbesondere eine Telefonnummer oder eine Kontakt- oder Kontaktierungsnummer umfassen oder enthalten, welche insbesondere mit einem Namen und/oder einem Begriff verknüpft sein kann. Die Benutzereingabe kann dann beispielsweise ein Befehl zur Kontaktaufnahme mit einer bestimmten, durch den jeweiligen Namen oder Begriff identifizierten Person, Organisation oder Einrichtung sein. Insbesondere kann die Benutzereingabe eine Spracheingabe, das heißt eine gesprochene Anweisung oder ein gesprochenes Stichwort sein oder umfassen. Alternativ oder ergänzend können jedoch als Benutzereingabe oder als Teil der Benutzereingabe auch andere Bedienhandlungen, wie beispielsweise ein manuelles Betätigen eines Bedienelements vorgesehen sein oder durchgeführt werden.

Als Verwendung des Datensatzes durch den Benutzer kann eine aktive, das heißt durch den Benutzer initiierte Verwendung oder Nutzung des Datensatzes oder eines Teils des Datensatzes verstanden werden. Ebenso kann hier jedoch auch eine passive Nutzung des Datensatzes oder eines Teils des Datensatzes durch den Benutzer verstanden werden oder gemeint sein .Eine passive Nutzung oder Verwendung kann beispielsweise durch einen Dritten initiiert sein. Dies kann beispielsweise bei einem eingehenden Anruf oder einer eingehenden oder ankommenden Kontaktanfrage oder Nachricht von einer Person oder Organisation oder dergleichen der Fall sein, insbesondere wenn der anrufenden Person oder Organisation ein Datensatz zugeordnet ist oder auf den Anruf hin zugeordnet wird. Dabei ist also nicht zwangsläufig eine Interaktion und insbesondere nicht zwangsläufig eine zeitnahe Interaktion von Seiten des Benutzers notwendig, um eine Verwendung des Datensatzes zu generieren oder zu zählen. Beispielsweise kann auch ein verpassten oder in Abwesenheit des Benutzers eingegangenen Anruf als Verwendung des entsprechenden Datensatzes aufgefasst werden.

Die Anzahl der Verwendungen eines Datensatzes kann beispielsweise diskret abgezählt und bei jeder Verwendung oder bei jeder Verwendungsinstanz um eine vorbestimmte Einheit, beispielsweise um 1 erhöht werden. Es kann dabei auch möglich sein, einen automatisierten Mechanismus oder eine automatisierte Funktion vorzusehen, durch welchen beziehungsweise durch welche die Anzahl von Verwendungen auf einen vorgegebenen, von einem jeweiligen aktuellen Zeitpunkt zurückliegenden Zeitraum beschränkt wird. Mit anderen Worten können also beispielsweise Verwendungen, welche länger als eine vorgegebene Zeitspanne zurückliegen, bei der Bestimmung des Häufigkeitswerts ignoriert oder außer Acht gelassen werden. Ebenso ist es möglich, bei der Bestimmung des Häufigkeitswerts Gewichtungsfaktoren vorzusehen oder zu berücksichtigen, wodurch eine Relevanz der letztendlich an den Benutzer ausgegebenen Teilmenge von Datensätzen verbessert werden kann. Solche Gewichtungsfaktoren können beispielsweise ein Alter der Verwendung, eine momentane Position des Benutzers, ein bestimmtes Verwendungsmuster oder dergleichen umfassen.

Die Teilmenge von Datensätzen kann aus der Obermenge beispielsweise entsprechend eines Ergebnisses einer Spracherkennung der Benutzereingabe ausgewählt werden. Bei der Ausgabe der Teilmenge an den Benutzer kann es dabei vorgesehen sein, jeweils nur eine Information oder nur bestimmte Informationen des jeweiligen Datensatzes, das heißt also nicht den vollständigen Datensatz, an den Benutzer auszugeben. Ebenso können sowohl die Obermenge als auch die Teilmenge der Datensätze beziehungsweise die jeweiligen individuellen Datensätze um weitere Informationen, beispielsweise aus einer weiteren Datenbank, ergänzt werden. Demnach kann es also möglich sein, dass ein letztendlich an den Benutzer ausgegebenes Datum oder eine letztendlich an den Benutzer ausgegebene Information erst durch eine entsprechende Ergänzung oder Verknüpfung mit weiteren Daten oder Datensätzen zu einem Teil des jeweiligen Datensatzes geworden und ursprünglich nicht direkt oder explizit in der von dem mobilen Endgerät abgerufenen Obermenge oder in dem jeweiligen von dem mobilen Endgerät abgerufenen Datensatz enthalten war. Beispielsweise kann die von dem mobilen Endgerät abgerufenen Obermenge eine Anrufliste sein, wobei die in dieser enthaltenen Telefonnummern erst nachträglich, beispielsweise durch einen Abgleich mit einer Datenbank, etwa mit einem Adressbuch, mit jeweiligen den einzelnen Telefonnummern zugeordneten Namen oder Begriffen verknüpft werden. Es kann also vorgesehen sein, dass die von dem mobilen Endgerät abgerufene Obermenge von Datensätzen in eine in dem Fahrzeug gespeicherte Datenbank integriert wird.

Da lediglich dann, wenn das Auswahlkriterium erfüllt ist, ein VIP-Datensatz ausgewählt wird, ist es im Umkehrschluss also möglich, dass - auch wenn die Teilmenge einen oder mehrere Datensätze enthält - kein VIP-Datensatz bestimmt oder ausgewählt wird. Dies kann beispielsweise der Fall sein, wenn alle Datensätze der Teilmenge denselben Häufigkeitswert aufweisen und/oder sich kein Datensatz hinsichtlich eines untersuchten Kriteriums oder einer ausgewerteten Eigenschaft signifikant von den übrigen Datensätzen abhebt oder unterscheidet. Es ist jedoch möglich, dass, falls die Teilmenge nur einen einzigen Datensatz umfasst, dieser eine Datensatz in jedem Fall als VIP-Datensatz bestimmt wird.

Eine Markierung des VIP-Datensatzes soll dazu geeignet sein, diesen für den Benutzer, insbesondere mit möglichst geringem Aufwand, gegenüber der übrigen oder restlichen Teilmenge abzuheben oder erkennbar zu machen. Dies kann beispielsweise durch eine farbliche Markierung, durch eine besonders herausgestellte Position oder Anordnung, durch ein zusätzliches grafisches Element oder Symbol, durch eine veränderte Darstellung oder dergleichen, aber beispielsweise auch durch eine akustische Markierung erfolgen. Zusätzlich oder alternativ kann es auch möglich sein, an einem entsprechenden zur Auswahl eines Datensatzes vorgesehenen Bedienelement bei einer Auswahl des VIP-Datensatzes eine individuelle haptische Rückmeldung zu erzeugen.

Eine Vorauswahl des VIP-Datensatzes kann bedeuten oder bewirken, dass eine tatsächliche, letztendliche Auswahl des Datensatzes oder eine Bestätigung der Vorauswahl, durch welche der vorausgewählte VIP-Datensatz als dem Benutzerwunsch entsprechend interpretiert wird, mit einer minimalen oder verringerten Anzahl weiterer Bedienhandlungen oder Interaktionen ermöglicht wird. Insbesondere kann es vorgesehen sein, dass lediglich eine einzige Bedienhandlung, wie beispielsweise ein einzelner Tastendruck oder ein einzelner Sprachbefehl, zur Bestätigung der Vorauswahl vorgesehen ist oder ausreicht. Es ist jedoch auch möglich, dass nach einer vorgegebenen Zeitspanne auch ohne weitere Bedienhandlung oder Interaktion des Benutzers der vorausgewählte VIP-Datensatz automatisch interpretiert wird als dem Benutzerwunsch entsprechend und demgemäß auch verwendet oder weiterverarbeitet wird.

Insgesamt kann durch das Verfahren eine Erkennung, eine Interpretation und eine Verarbeitung der Benutzereingabe verbessert werden, da die von dem mobilen Endgerät abgerufene Obermenge von Datensätzen als zusätzliche - vorteilhaft besonders aktuelle - Eingangsgröße oder Datenbasis herangezogen und genutzt werden kann. So kann eine besonders effiziente Bedienbarkeit erreicht werden, da beispielsweise eine Anzahl von Bedienhandlungen, Rückfragen, Auswahlschritten und/oder Bestätigungen reduziert werden kann, da mit höherer Wahrscheinlichkeit und Zuverlässigkeit automatisiert eine dem jeweiligen Benutzerwunsch entsprechende Vorauswahl getroffen werden kann. Damit einher geht vorteilhaft eine Erhöhung einer Sicherheit beim Betrieb des Fahrzeugs, da durch das erfindungsgemäße Verfahren eine, insbesondere visuelle, Ablenkung und/oder eine mentale Beanspruchung des Benutzers bei der Durchführung der Benutzereingabe und zur Erzielung einer Umsetzung seines Bedienwunsches minimiert wird. Besonders vorteilhaft kann das erfindungsgemäße Verfahren für ein Sprachdialogsystem in dem Fahrzeug genutzt werden, bei dessen Bedienung der Benutzer während der Interaktion mit dem Sprachdialogsystem, das heißt also während der Benutzereingabe, seinen Blick auf das umgebende Verkehrsgeschehen gerichtet lassen kann.

Das Abrufen der Obermenge von Datensätzen von dem mobilen Endgerät kann beispielsweise automatisiert und/oder durch den Benutzer veranlasst über eine, bevorzugt kabellose, Datenverbindung zwischen dem mobilen Endgerät und dem Fahrzeug oder der Datenverarbeitungseinrichtung des Fahrzeugs erfolgen. Bevorzugt kann hierfür ein Bluetooth-Protokoll verwendet werden.

Bei dem erfindungsgemäßen Verfahren ist es vorgesehen, dass das Auswahlkriterium ist, ob ein Relativwert größer ist als ein vorgegebener Schwellwert, wobei der Relativwert gebildet wird durch ein Verhältnis des größten Häufigkeitswerts zu dem zweitgrößten Häufigkeitswert oder durch ein Verhältnis des größten Häufigkeitswerts zu einer Summer aller Häufigkeitswerte der Datensätze der Teilmenge. Mit anderen Worten wird also überprüft, ob eine relative Verwendungshäufigkeit eines bestimmten Datensatzes sich signifikant von den relativen Verwendungshäufigkeit in der übrigen Datensätze abhebt oder unterscheidet. Bei einer konkreten Implementierung kann selbstverständlich auch ein äquivalentes Kriterium überprüft werden, wie beispielsweise, ob ein Relativwert kleiner ist als ein entsprechend angepasster vorgegebener Schwellwert. Durch die Verwendung des Auswahlkriteriums kann vorteilhaft sichergestellt werden, dass dem Benutzer nur dann ein bestimmter Datensatz als VIP-Datensatz präsentiert wird, wenn dieser tatsächlich eine signifikant herausragende Verwendungshäufigkeit aufweist. Somit kann beispielsweise verhindert werden, dass der Benutzer bei einer zumindest annähernd gleich häufigen Verwendung mehrerer Datensätze eine im Einzelfall mit einer entsprechend hohen Wahrscheinlichkeit nicht seinem Wunsch entsprechende Vorauswahl zunächst aufheben oder korrigieren muss. Dadurch kann vorteilhaft eine Irritation des Benutzers vermieden und/oder ein Frustrationsgrad bei der Benutzereingabe minimiert werden.

In weiterer Ausgestaltung des erfindungsgemäßen Verfahrens ist es vorgesehen, dass nach der Bestimmung des VIP-Datensatzes mittels der Ausgabeeinrichtung eine Sprachanfrage an den Benutzer ausgegeben wird zur Abfrage, ob der gewünschte Datensatz markiert und/oder vorausgewählt wurde. Insbesondere ist es vorgesehen, dass mit der Sprachanfrage konkret ein den ausgewählten VIP-Datensatz identifizierendes Merkmal, wie beispielsweise ein Name oder ein Begriff, angegeben wird. Dies ermöglicht es dem Benutzer vorteilhaft, mit minimalem Bedienaufwand eine Weiterverarbeitung oder Umsetzung seiner Benutzereingabe zu erreichen. Besonders vorteilhaft muss der Benutzer dann nicht notwendigerweise die ausgegebene Teilmenge von Datensätzen kontrollieren. Die Sprachanfrage kann auch eine mit der ursprünglichen Benutzereingabe angefragte oder angeforderte Aktion nennen, sodass der Benutzer vorteilhaft auch ohne zusätzliche Kontrolle sicherstellen kann, dass die gewünschte Aktion oder Art von Aktion verstanden wurde und/oder durchgeführt wird.

Bevorzugt kann dabei nach der Bestimmung des VIP-Datensatzes, falls mit diesem mehr als eine Telefonnummer, Kontaktnummer oder Kontaktierungsinformationen verknüpft ist, für alle mit dem VIP-Datensatz verknüpften Telefonnummern, Kontaktnummern oder Kontaktierungsinformationen eine jeweilige Verwendungshäufigkeit ermittelt werden. Mit der Sprachanfrage zur Bestätigung der Markierung und/oder Vorauswahl wird dann zusätzlich abgefragt, ob die Telefonnummer, Kontaktnummer oder Kontaktierungsinformation mit der größten Verwendungshäufigkeit bei einer Verarbeitung oder Weiterverarbeitung oder Umsetzung der Benutzereingabe verwendet werden soll. Dadurch kann vorteilhaft ein zusätzlicher Auswahlschritt oder eine zusätzliche Benutzereingabe vermieden und so eine zur Umsetzung oder Ausführung der Intention der ursprünglichen Benutzereingabe notwendige Zeit minimiert und insgesamt also eine Effizienz bei der Verarbeitung der Benutzereingabe erhöht werden. Anstelle der tatsächlichen Telefonnummer kann mit der Sprachanfrage bevorzugt eine Bezeichnung der Telefonnummer, beispielsweise "Mobilnummer" oder "Festnetz" oder "Festnetznummer" abgefragt werden. Dadurch ergibt sich vorteilhaft für den Benutzer eine verbesserte und leichtere Verständlichkeit der Sprachanfrage, sodass der Benutzer mit größerer Zuverlässigkeit und mit geringerem mentalen Verarbeitungsaufwand eine Entscheidung zur Bestätigung oder Ablehnung der Sprachanfrage treffen kann.

In weiterer Ausgestaltung des erfindungsgemäßen Verfahrens ist es vorgesehen, dass die Teilmenge von Datensätzen als Liste ausgegeben wird, wobei der VIP-Datensatz als erstes Listenelement und nachfolgend die übrigen Datensätze der Teilmenge alphabetisch sortiert ausgegeben werden. Dies ermöglicht es besonders vorteilhaft, einerseits den VIP-Datensatz besonders einfach und schnell zu identifizieren und andererseits, insbesondere wenn der VIP-Datensatz nicht dem gewünschten Datensatz entspricht, den tatsächlich gewünschten Datensatz besonders einfach, schnell und zuverlässig aufzufinden. Besonders vorteilhaft ist es dabei, dass die alphabetische Sortierung der übrigen Datensätze zeitlich invariant ist, sodass beispielsweise auch bei wechselnden relativen Verwendungshäufigkeiten der Datensätze der Benutzer stets mit einer ihm vertrauten Liste oder Listenreihenfolge konfrontiert ist. Bei einer Sortierung der gesamten Teilmenge von Datensätzen anhand der relativen Verwendungshäufigkeiten hingegen kann die Reihenfolge der Datensätze stets eine andere sein, wodurch ein Auffinden eines bestimmten Datensatzes für den Benutzer erschwert wird.

In weiterer Ausgestaltung des erfindungsgemäßen Verfahrens ist es vorgesehen, dass als Obermenge von Datensätzen eine Anrufliste verwendet wird, welche Informationen zu ausgehenden und/oder eingehenden Anrufen enthält. Eingehende Anrufe können dabei sowohl entgegengenommene oder angenommene als auch verpasste oder nicht angenommene Anrufe sein. Auch ausgehende Anrufen können Anrufe, die zu einer erfolgreichen Verbindung geführt haben, und Anrufe, die nicht zu einer erfolgreichen Verbindung geführt haben, umfassen. Besonders vorteilhaft kann somit eine vollständige Interaktionshistorie des Benutzers mit dem entsprechenden Datensatz, beispielsweise mit einem bestimmten Kontakt aus einem Adressbuch, berücksichtigt werden. Dies kann beispielsweise dann besonders vorteilhaft sein, wenn der Benutzer von sich aus einen Kontakt oder eine Person anrufen möchte, welche bei bisherigen Kontaktinstanzen, das heißt also beispielsweise bei bisherigen Telefonaten und somit bei bisherigen Verwendungen des entsprechenden Datensatzes, meist den Kontakt oder Anruf initiiert oder veranlasst hat. Durch die Nutzung oder das Heranziehen der Kontaktdaten, insbesondere der entsprechenden Verwendungshäufigkeiten, von dem mobilen Endgerät des Benutzers kann vorteilhaft auf eine vergrößerte Datenbasis zurückgegriffen werden, sodass die Bestimmung des VIP-Datensatzes mit größerer oder verbesserter Zuverlässigkeit und Genauigkeit erfolgt, da beispielsweise nicht nur eine Statistik von Verwendungen der Datensätze in dem Fahrzeug oder mit Einrichtungen oder Geräten des Fahrzeugs herangezogen, verwendet oder ausgewertet wird.

Das mobile Endgerät kann beispielsweise ein Mobiltelefon (Smartphone), ein Messenger, ein Computer (Laptop, Tablet) oder dergleichen sein. Es ist auch möglich, entsprechende Datensätze oder Obermengen von Datensätzen von mehreren mobilen Endgeräten gleichzeitig oder nacheinander abzurufen und die jeweiligen Datensätze oder Obermengen miteinander zu kombinieren und/oder additiv oder einander ergänzend in einer einzigen Datenbank oder Datenbankanwendung zu speichern und/oder auszuwerten. Ebenso kann auch ein Abrufen der Obermenge oder einer Obermenge von Datensätzen, beispielsweise über das Internet, von einer Servereinrichtung (Provider, Cloud) vorgesehen sein. Es können auch unterschiedliche Arten von Datensätzen oder Obermengen von Datensätzen abgerufen und hinsichtlich einer Anzahl von Verwendungen oder Interaktionen eines bestimmten Datensatzes beziehungsweise mit einem bestimmten Datensatz, das heißt beispielsweise eine Anzahl von Interaktionen oder Kontakten mit einer bestimmten Person, ausgewertet werden. Dies kann außer einer Anrufliste beispielsweise auch eine Nachrichtenliste oder eine Nachrichtenhistorie umfassen, in welcher beispielsweise eingehende und/oder ausgehende Kurznachrichten (SMS) und/oder Messenger-Nachrichten und/oder E-Mails aufgeführt oder nachgehalten sind. Dadurch kann vorteilhaft eine Zuverlässigkeit und Genauigkeit der Bestimmung des VIP-Datensatzes weiter erhöht oder verbessert werden, sodass mit größerer Wahrscheinlichkeit der korrekte, das heißt der tatsächlich vom Benutzer gewünschte Datensatz als VIP-Datensatz bestimmt wird.

In weiterer Ausgestaltung des erfindungsgemäßen Verfahrens ist es vorgesehen, dass die Obermenge von Datensätzen bei oder nach jedem Verbinden des mobilen Endgeräts mit dem Fahrzeug jeweils nur einmalig abgerufen wird. Insbesondere und bevorzugt kann dieses einmalige Abrufen selbsttätig oder automatisiert erfolgen. Vorteilhaft ist es somit nicht notwendig, für jede Benutzereingabe oder bei jeder Benutzereingabe erneut eine Verbindung mit dem mobilen Endgerät herzustellen, wodurch eine Verarbeitungsgeschwindigkeit der Benutzereingabe erhöht und eine Belastung des mobilen Endgeräts verringert werden kann. Zum Beispiel wird so nicht unnötig ein Akku des mobilen Endgeräts belastet. Ebenso müssen vorteilhaft gegebenenfalls vorgesehene Datenverarbeitungsschritte der von dem mobilen Endgerät abgerufenen Daten nur einmalig nach jedem Verbinden des mobilen Endgeräts mit dem Fahrzeug durchgeführt werden, wodurch vorteilhaft ebenfalls Zeit- und Rechen- und/oder Datenverarbeitungsaufwand auf Seiten des Fahrzeugs eingespart werden kann. Bevorzugt kann die Obermenge von Datensätzen unmittelbar nach jedem Verbinden des mobilen Endgeräts mit dem Fahrzeug und somit insbesondere vor der Benutzereingabe erfolgen. Dies garantiert vorteilhaft eine möglichst verzögerungsfreie und schnelle Verarbeitung der Benutzereingabe. Vorteilhaft kann, nachdem die Daten von dem mobilen Endgerät einmalig abgerufen und beispielsweise in einer Speichereinrichtung des Fahrzeugs gespeichert wurden, auch zu späteren Zeitpunkten auf diese Daten zurückgegriffen werden, insbesondere auch dann, wenn das mobile Endgerät nach dem Verbinden und dem Abruf der Daten ausgeschaltet worden ist.

Ein erfindungsgemäßes Kraftfahrzeug umfasst eine Datenverarbeitungseinrichtung und eine über eine oder mittels einer Datenverbindung mit der Datenverarbeitungseinrichtung verbundene Ausgabeeinrichtung zum Ausgeben von Informationen, Benachrichtigungen oder dergleichen an einen Benutzer. Der Benutzer kann insbesondere ein Fahrzeuginsasse sein. Um eine möglichst effiziente Bedienbarkeit zu bieten, ist es erfindungsgemäß vorgesehen, dass das Kraftfahrzeug eine Datenschnittstelle zum Verbinden des Kraftfahrzeugs mit einem mobilen Endgerät aufweist über welche oder mittels welcher zwischen der Datenverarbeitungseinrichtung und dem mobilen Endgerät Daten austauschbar sind oder ausgetauscht werden oder werden können. Das Kraftfahrzeug weist dabei weiterhin einen Datenspeicher oder eine Datenspeichereinrichtung mit einem von der Datenverarbeitungseinrichtung ausführbaren Programmcode auf, welcher dazu eingerichtet ist, bei einer Ausführung des Programmcodes durch die Datenverarbeitungseinrichtung zumindest eine Ausführungsform des erfindungsgemäßen Verfahrens durchzuführen.

In weiterer Ausgestaltung des erfindungsgemäßen Kraftfahrzeugs ist es vorgesehen, dass das Kraftfahrzeug eine zum Erfassen der Benutzereingabe eingerichtete Eingabeeinrichtung aufweist, welche eine Mikrofoneinrichtung zum Erfassen akustischer Spracheingaben des Benutzers umfasst und welche über eine Datenverbindung mit der Datenverarbeitungseinrichtung verbunden ist. Somit können also Spracheingaben oder Sprachbefehle des Benutzers der Datenverarbeitungseinrichtung zugeführt oder bereitgestellt oder übermittelt werden.

In weiterer Ausgestaltung des erfindungsgemäßen Kraftfahrzeugs ist es vorgesehen, dass die Ausgabeeinrichtung einerseits eine Anzeigefläche zur visuellen Informationsdarstellung, das heißt also ein Display oder dergleichen, umfasst und andererseits eine Lautsprechereinrichtung zur akustischen Informationsausgabe und/oder eine Datenschnittstelle zum Übermitteln von Ausgabedaten an eine Lautsprechereinrichtung oder dergleichen aufweist. Mit anderen Worten können dem Benutzer also beispielsweise die Teilmenge von Datensätzen und insbesondere der VIP-Datensatz optisch wahrnehmbar angezeigt werden. Dazu kann beispielsweise ein in einer Instrumententafel des Kraftfahrzeugs angeordnetes Display und/oder ein Head-up-Display verwendet werden. Die Lautsprechereinrichtung kann bevorzugt zur akustischen Ausgabe von Sprachanfragen an den Benutzer dienen, welche beispielsweise eine Nachfrage oder Aufforderung zur Bestätigung der Vorauswahl des VIP-Datensatzes umfassen können. Dazu kann anstelle einer Lautsprechereinrichtung oder eines Lautsprechersystems des Kraftfahrzeugs auch ein entsprechender Datenstrom über die Datenschnittstelle beispielsweise an ein Headset übermittelt werden. Es kann auch möglich sein, beispielsweise das mobile Endgerät selbst zur visuellen oder optischen und/oder akustischen Informationsausgabe an den Benutzer zu verwenden.

Die bisher und im Folgenden sowie in den Patentansprüchen angegebenen Einzelheiten, Merkmale und Ausbildungen des erfindungsgemäßen Verfahrens und des erfindungsgemäßen Kraftfahrzeugs sowie die entsprechenden Vorteile sind jeweils entsprechend sinngemäß wechselseitig zwischen dem erfindungsgemäßen Verfahren und dem erfindungsgemäßen Kraftfahrzeug austauschbar oder übertragbar. Dies gilt auch für zur Durchführung des erfindungsgemäßen Verfahrens verwendete oder verwendbare Bauteile, Geräte und Einrichtungen.

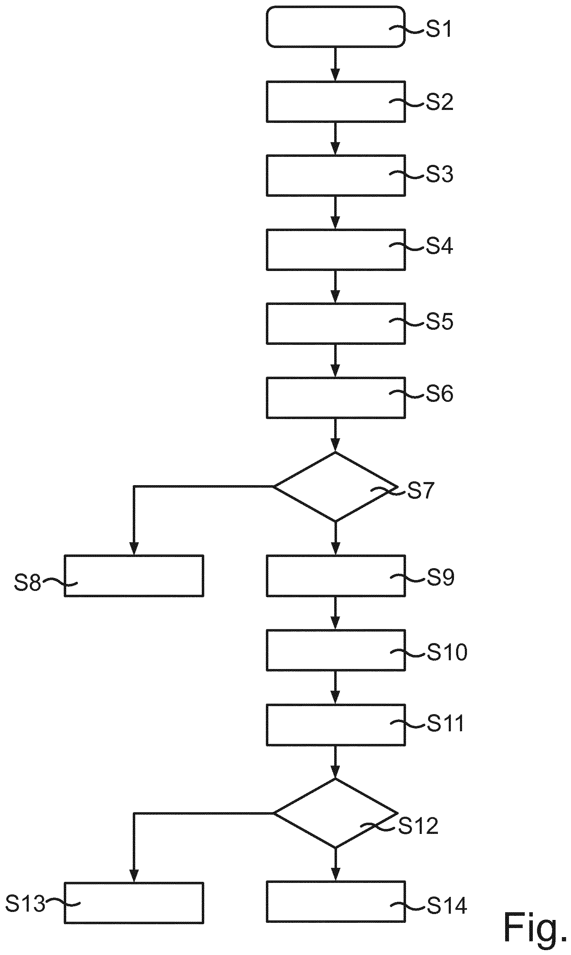

Weitere Merkmale, Einzelheiten und Vorteile ergeben sich aus der nachfolgenden Beschreibung eines bevorzugten Ausführungsbeispiels sowie anhand der Zeichnung. Dabei zeigt die einzige Figur einen beispielhaften schematischen Ablaufplan einer Ausführungsform des erfindungsgemäßen Verfahrens und

Die einzige Figur zeigt schematisch einen beispielhaften Ablaufplan eines Verfahrens zum Verarbeiten einer Benutzereingabe in einem Kraftfahrzeug. In einem Verfahrensschritt S1 wird das Verfahren, beispielsweise mit einem Verbinden eines Smartphones eines Benutzers mit dem Kraftfahrzeug über eine Bluetooth-Datenverbindung, gestartet. Anschließend wird in einem Verfahrensschritt S2 durch eine Datenverarbeitungseinrichtung des Kraftfahrzeugs von dem Smartphone eine Anrufliste abgerufen, welche Informationen zu gewählten oder getätigten ausgehenden, Informationen zu eingehenden angenommenen und Informationen zu eingehenden verpassten oder nicht angenommenen Anrufen enthält. Diese Anrufliste stellt also eine Obermenge von Datensätzen dar. Ein einzelner Datensatz kann dabei insbesondere einem Kontaktpartner, das heißt beispielsweise einer Person oder Organisation, entsprechen oder zugeordnet sein, wobei dieser Person und damit diesem Datensatz alle eingehenden, ausgehenden und nicht zu einer erfolgreichen Verbindung führenden Anrufe sowie die entsprechenden Telefonnummern zugeordnet sind. Falls einer bestimmten Telefonnummer, welche in der Anrufliste enthalten ist, kein Kontaktpartner, das heißt beispielsweise keine Person oder kein Name oder kein identifizierender Begriff, zugeordnet ist oder zugeordnet werden kann, so kann diese Telefonnummer auch einen eigenständigen Datensatz bilden oder darstellen oder als solcher behandelt werden. Zusätzlich können von dem Smartphone auch noch weitere Informationen, Daten oder Datensätze abgerufen werden. Dies kann beispielsweise ein Adressbuch oder eine Adress- und/oder Namensdatenbank oder Kontaktdatenbank umfassen. Vorteilhaft können auch mit den einzelnen Anrufen der Anrufliste verknüpfte Zeitstempel mit der oder als Teil der Anrufliste abgerufen werden.

Alle von dem Smartphone abgerufenen Informationen, Daten und/oder Datensätze werden dann in einem Verfahrensschritt S3 mit einer Datenbank des Kraftfahrzeugs verknüpft oder kombiniert oder in diese Datenbank des Kraftfahrzeugs integriert. Die Datenbank des Kraftfahrzeugs kann in einer Speichereinrichtung des Kraftfahrzeugs gespeichert oder abgelegt sein. Die Datenbank des Kraftfahrzeugs kann also beispielsweise um die von oder aus dem Smartphone abgerufenen Informationen ergänzt werden und/oder die Datenbank des Kraftfahrzeugs kann mit diesen Informationen aktualisiert werden, sodass die Datenbank des Kraftfahrzeugs insgesamt auf dem aktuellsten verfügbaren Stand ist. Die Datenbank des Kraftfahrzeugs kann ebenfalls beispielsweise ein Adressbuch oder eine Kontaktdatenbank sein oder umfassen.

Zu einem beliebigen nachfolgenden Zeitpunkt erfolgt in einem Verfahrensschritt S4 eine Benutzereingabe. Bevorzugt handelt es sich dabei um eine Spracheingabe oder einen Sprachbefehl, welcher von einer entsprechenden Erfassungseinrichtung des Kraftfahrzeugs, welche beispielsweise ein Mikrofon umfassen kann, erfasst und an die Datenverarbeitungseinrichtung des Kraftfahrzeugs übermittelt wird. Vorliegend kann die Spracheingabe beispielsweise lauten: "Anrufen bei Peter". Diese Spracheingabe wird mittels der Datenverarbeitungseinrichtung im Rahmen einer automatisierten Spracherkennung verarbeitet und ausgewertet. Basierend auf einem Ergebnis der Spracherkennung wird eine zu der erkannten Benutzereingabe passende Teilmenge von in der Datenbank des Kraftfahrzeugs verfügbaren Datensätzen, hier also von passenden Kontaktpartnern, in einem Verfahrensschritt S5 ausgewählt. Beispielsweise kann diese Teilmenge also alle Kontaktpartner mit dem Vornamen "Peter" umfassen.

Bei heutigen Spracherkennungssystemen wird auf eine derartige Spracheingabe oder einen derartigen Bedienvorgang hin üblicherweise jede der in einer entsprechenden Datenbank, beispielsweise in dem Adressbuch des Kraftfahrzeugs, vorhandene Kontakt oder Kontaktpartner mit dem Namen "Peter" dem Benutzer als Liste angezeigt, welche typischerweise vollständig alphabetisch sortiert ist. Ein Beispiel für eine solche herkömmliche alphabetisch sortierte Liste ist:
1. Peter Arnold
2. Peter Bauer
3. Peter Eckardt
4. Peter Mueller
Dabei werden dem Benutzer nachteilig alle rein aufgrund der Spracherkennung oder Sprachauswertung infrage kommenden Kontakte angezeigt, obwohl nicht alle Kontakte gleich relevant sind, so das der tatsächlich gewünschte oder von dem Benutzer gemeinte Kontakt gegebenenfalls auch weit unten in der Liste stehen und je nach zur Verfügung stehendem Anzeigegerät oder Anzeigeplatz auch beispielsweise zunächst gar nicht sichtbar sein kann. In Folge muss der Benutzer sich intensiv mit der angezeigten Liste auseinandersetzen, um den von ihm gewünschten oder gemeinten Kontakt zu finden, zu identifizieren und auszuwählen.

Um eine verbesserte und effizientere Verarbeitung der Benutzereingabe und somit auch einer Bedienbarkeit des Kraftfahrzeugs zu bieten oder zu erzielen, erfolgt vorliegend in einem sich an die Auswahl der Teilmenge anschließenden Verfahrensschritt S6 für jeden Datensatz der Teilmenge eine Bestimmung eines jeweiligen Häufigkeitswerts, welcher einer Anzahl von bisherigen Verwendungen dieses Datensatzes entspricht. Die Teilmenge von Datensätzen kann also hinsichtlich der jeweiligen Verwendungshäufigkeit der einzelnen Datensätze analysiert werden und es kann dann beispielsweise eine nach den Häufigkeiten, Verwendungshäufigkeit oder Häufigkeitswerten sortierte Liste, Rangliste oder Rankingsliste aufgestellt werden.

Die so bestimmten Häufigkeitswerte oder die so aufgestellte Rangliste wird dann in einem Verfahrensschritte S7 hinsichtlich eines Auswahlkriteriums ausgewertet. Vorliegend dient als Auswahlkriterium die Fragestellung, ob ein Relativwert größer ist als ein vorgegebener Schwellwert oder Grenzwert. Der Relativwert wird dabei gebildet als Verhältnis des größten bestimmten Häufigkeitswerts zu dem zweitgrößten Häufigkeitswert, wobei auch eine Summe aller Häufigkeitswerte der Datensätze der Teilmenge berücksichtigt werden oder in die Auswertung des Auswahlkriteriums eingehen oder einfließen kann. Beispielsweise kann die Situation auftreten, dass der am häufigsten verwendete Datensatz, das heißt also derjenige Datensatz mit dem größten Häufigkeitswert, bisher 20 mal verwendet wurde. Beispielsweise kann der entsprechende Kontaktpartner 20 mal angerufen worden sein. Gibt es nun beispielsweise einen oder mehrere weitere Datensätze der Teilmenge, welche beispielsweise jeweils 19 mal verwendet wurden, so sind die jeweiligen Unterschiede der Verwendungshäufigkeiten oder Häufigkeitswerte nicht als signifikant zu betrachten und der Relativwert von 20 zu 19 oder etwa 1,053 kann kleiner als der vorgegebene Schwellwert sein. In diesem Fall ist also das Auswahlkriterium nicht erfüllt und es kann dementsprechend in einem Verfahrensschritte S8 beispielsweise dem bekannten Vorgehen entsprechend die Teilmenge von Datensätzen als alphabetisch sortierte Liste ausgegeben werden. Es ist jedoch auch möglich, in diesem Fall beispielsweise den am häufigsten verwendeten Datensatz kenntlich zu machen.

Ist hingegen stattdessen die Situation gegeben, dass der am häufigsten verwendete Datensatz 20 mal verwendet wurde, der am zweithäufigsten verwendete Datensatz jedoch beispielsweise nur 5 mal oder nur 10 mal verwendet wurde, so ist der Unterschied der Verwendungshäufigkeiten als signifikant zu betrachten oder zu bewerten. Demzufolge kann der vorgegebene Schwellwert so gewählt sein, dass der Relativwert von 20 zu 5 oder von 20 zu 10, das heißt also von 5 oder von 2, größer ist als der vorgegebene Schwellwert. Demzufolge ist in diesem Fall das Auswahlkriterium erfüllt und in einem Verfahrensschritt S9 wird der am häufigsten verwendete Datensatz, das heißt derjenige Datensatz mit dem größten Häufigkeitswert als VIP-Datensatz bestimmt.

Für den Fall, dass die Analyse der Verwendungshäufigkeiten der Telefonnummern keinen VIP-Datensatz als Ergebnis liefert, so kann es auch möglich sein, einen anderen oder mehrere andere Parameter oder Eigenschaften der jeweiligen Datensätze auszuwerten oder zu analysieren. Dies kann beispielsweise eine Auswertung einer Verwendungs- oder Kommunikationshäufigkeit über andere Kommunikationsmittel oder -kanäle, wie etwa email, umfassen. Aus dieser zusätzlichen Auswahl kann dann durch ein entsprechende angepasstes Auswahlkriterium gegebenenfalls dennoch ein VIP-Datensatz bestimmt werden.

Alternativ kann es auch vorgesehen sein, dass beispielsweise unmittelbar nach dem Verfahrensschritt S3 die gesamte Datenbank, das heißt also die Gesamtheit aller Datensätze nach ihren Verwendungshäufigkeiten analysiert wird. In diesem Fall wären nach oder mit der Auswahl der Teilmenge der zu der Benutzereingabe passenden Datensätze bereits die jeweiligen Häufigkeitswerte bekannt. Ebenfalls ist es möglich, beispielsweise unmittelbar nach dem Verfahrensschritt S3 - also insbesondere bereits vor der Benutzereingabe - die jeweiligen Häufigkeitswerte aller Datensätze zu bestimmen und in einer aufwändigeren oder komplexeren Zuordnung jeweils einen VIP-Datensatz für mehrere unterschiedliche Teilmengen zu bestimmen. Beispielsweise können jeweils alle Datensätze, welche einen bestimmten Begriff enthalten oder ein bestimmtes Merkmal aufweisen zu einer Teilmenge zusammengefasst werden, welche dann in der beschriebenen Art und Weise zur Bestimmung des jeweiligen VIP-Datensatzes dieser Teilmenge ausgewertet oder analysiert wird. Dabei kann es auch möglich sein, dass ein einzelner Datensatz in mehreren, nach unterschiedlichen Kriterien konstruierten oder erstellten Teilmengen vorkommt. Dadurch kann vorteilhaft ein nach der Benutzereingabe notwendiger Datenverarbeitungs- und Zeitaufwand minimiert werden. Beispielsweise können jeweils alle Datensätze, welche den gleichen Vornamen umfassen, in eine Teilmenge eingeordnet werden. Das heißt, dass eine erste Teilmenge beispielsweise alle Kontaktpartner mit dem Namen "Peter" und eine zweite Teilmenge beispielsweise alle Kontaktpartner mit dem Namen "Thomas" umfassen kann. Es kann dann nach dem Durchführen der Spracherkennung für die Benutzereingabe beispielsweise besonders schnell und einfach überprüft werden, ob bereits vorab, das heißt vor der Benutzereingabe ein Kontaktpartner mit dem Namen "Peter" als VIP-Datensatz oder VIP-Kontakt bestimmt oder eingestuft wurde.

Nach der Bestimmung des VIP-Datensatzes wird in einem Verfahrensschritt S10 überprüft, ob der VIP-Datensatz mehrere Telefonnummern enthält beziehungsweise ob dem entsprechenden Kontaktpartner mehrere Telefonnummern zugeordnet sind oder ob mit dem VIP-Datensatz oder dem entsprechenden Kontaktpartner mehrere Telefonnummern verknüpft sind. Ist dies der Fall, so wird die meistverwendete Telefonnummer bestimmt. Es kann auch möglich sein, bei einem Vorliegen mehrerer Telefonnummern für diese eine dem Verfahrensschritt S7 entsprechende oder analoge Analyse oder Auswertung anhand eines entsprechenden Auswahlkriteriums durchzuführen, womit dann gegebenenfalls eine der mehreren Telefonnummern als bevorzugte Telefonnummer oder als VIP-Telefonnummer bestimmt werden kann. Für das vorliegende Beispiel soll angenommen werden, dass beispielsweise eine Mobilnummer des VIP-Datensatzes die signifikant am häufigsten zur Kommunikation mit dem dem VIP-Datensatz zugeordneten oder entsprechenden Kontaktpartner verwendete Telefonnummer ist.

Nach der Bestimmung des VIP-Datensatzes wird in einem Verfahrensschritt S11 die Teilmenge der zu der Benutzereingabe passenden Datensätze in Form einer optimierten Liste ausgegeben. In dieser optimierten Liste ist der VIP-Datensatz ganz oben, das heißt als erstes Element oder Listenelement angeordnet, besonders hervorgehoben oder markiert und vorausgewählt. Die übrigen Datensätze der Teilmenge sind dem VIP-Datensatz nachfolgend in alphabetischer Reihenfolge sortiert oder angeordnet:
*Peter Mueller*
2. Peter Arnold
3. Peter Bauer
4. Peter Eckardt

Gleichzeitig oder anschließend wird in einem Verfahrensschritt S12 mittels einer Lautsprechereinrichtung eine akustische Sprachanfrage oder Bestätigungsanfrage an den Benutzer ausgegeben. Eine solche Sprachanfrage kann beispielsweise durch ein Sprachdialogsystem des Kraftfahrzeugs automatisiert generiert werden und kann beispielsweise lauten: "Wollen Sie Peter Mueller auf der Mobilnummer anrufen?"

Es kann auch vorgesehen sein, dass für die Sprach- oder Bestätigungsanfrage nur die Verwendungshäufigkeiten der mehreren, in dem VIP-Datensatz enthaltenen Telefonnummern bei ausgehenden Anrufen analysiert werden, sodass also mit der Sprachanfrage abgefragt wird, ob auf der bisher am häufigsten zur Kontaktaufnahme mit dem VIP-Kontakt - hier also mit Peter Mueller, verwendeten Telefonnummer angerufen werden soll. Es ist dabei auch möglich, weitere Parameter zu berücksichtigen, wie beispielsweise eine aktuelle Uhrzeit und/oder jeweilige Uhrzeiten der einzelnen Verwendungen oder Verwendungsinstanzen der unterschiedlichen, dem VIP-Kontakt zugeordneten Telefonnummern. So kann vorteilhaft die zu einem jeweiligen Zeitpunkt wahrscheinlichste oder sinnvollste Telefonnummer ermittelt werden. Beispielsweise kann während üblicher Geschäftszeiten ein Anruf auf einer geschäftlichen Telefonnummer oder einer Telefonnummer eines Büros und außerhalb üblicher Geschäftszeiten ein Anruf auf einer privaten Telefonnummer vorgeschlagen oder nachgefragt werden. Dabei kann es auch möglich sein, die Datenbank des Kraftfahrzeugs oder eine andere Informationsquelle zur Bestimmung beispielsweise der üblichen Geschäftszeiten in Abhängigkeit von einem wahrscheinlichen Aufenthaltsort oder einer Adresse des VIP-Kontaktes zu ermitteln.

Alternativ kann die Sprachanfrage beispielsweise auch lauten: "Meinen Sie Peter Mueller?" Dies kann beispielsweise vorgesehen sein, falls der VIP-Datensatz nur eine Telefonnummer enthält oder falls die Analyse der Verwendungshäufigkeiten der mehreren Telefonnummern nicht durchgeführt wurde oder keine signifikant am häufigsten verwendete Telefonnummer als Ergebnis geliefert hat.

Das Verfahren kann auch dann angewendet werden, wenn der Benutzer bei seiner ersten Benutzereingabe beispielsweise einen vollständigen Namen sagt. Eine solche Benutzereingabe kann im vorliegenden Beispiel etwa lauten: "Anrufen bei Peter Mueller". Hier kann zum Beispiel bei einer Erkennung mehrere möglicher Treffer oder Übereinstimmungen im Rahmen der Spracherkennung der VIP-Datensatz aus oder bezüglich dieser Gruppe oder Teilmenge von Namen oder Datensätzen besonders hervorgehoben werden. Es kann also unabhängig von der konkreten Art der Benutzereingabe ein bestimmter Datensatz - eben gerade der als VIP-Datensatz bestimmte Datensatz - priorisiert bei der weiteren Verarbeitung der Benutzereingabe behandelt werden.

Ebenso kann es möglich sein, dass mehrere Datensätze vorhanden sind, welche den gleichen vollständigen Namen umfassen. Beispielsweise können also zwei Datensätze vorhanden sein, in welchen jeweils als Name des entsprechenden Kontakts "Peter Mueller" angegeben ist. Auch in diesem Fall kann durch die Berücksichtigung und Auswertung der Häufigkeitswerte vorteilhaft einer dieser Datensätze als VIP-Datensatzes bestimmt werden.

Wird die Sprach- oder Bestätigungsanfrage von dem Benutzer abgelehnt oder negativ beantwortet, so kann in einem Verfahrensschritt S13 eine Korrekturbehandlung veranlasst oder beispielsweise das Verfahren abgebrochen werden. Es ist hier beispielsweise möglich, zu einem früheren Verfahrensschritt zurück zu springen, eine unter Berücksichtigung der negativen Antwort angepasste erneute Spracherkennung der Benutzereingabe durchzuführen, weitere Informationen oder Einschränkungen von dem Benutzer anzufordern oder dergleichen mehr.

Wird die Sprach- oder Bestätigungsanfrage hingegen von dem Benutzer bestätigt, bejaht oder positiv beantwortet, so kann in einem Verfahrensschritt S14 die Ausführung des entsprechenden Befehls oder der entsprechenden mit der ursprünglichen Benutzereingabe angeforderten Aktion veranlasst werden.

Nimmt der Benutzer im Folgenden eine weitere Benutzereingabe vor, wobei das Smartphone zwischen den beiden Benutzereingaben nicht getrennt und erneut mit dem Kraftfahrzeug verbunden worden ist, so kann nunmehr beispielsweise mit dem Verfahrensschritt S4 beginnend das Verfahren erneut durchlaufen werden.

## Patentansprüche

1. Verfahren zum Verarbeiten einer Benutzereingabe, bei dem
- mittels einer Datenverarbeitungseinrichtung eines Fahrzeugs
• eine Auswertung der Benutzereingabe durchgeführt (S4) und basierend auf einem Ergebnis der Auswertung aus einer Obermenge von personenbezogenen Datensätzen eine zu der Benutzereingabe passende Teilmenge ausgewählt wird (S5),
• für jeden Datensatz der Teilmenge ein Häufigkeitswert bestimmt wird (S6), welcher einer Anzahl von bisherigen Verwendungen des Datensatzes entspricht, und
- mittels einer Ausgabeeinrichtung des Fahrzeugs die Teilmenge von Datensätzen angepasst an die bestimmten Häufigkeitswerte an den Benutzer ausgegeben wird (S11),
- die Obermenge von Datensätzen vor der Auswahl (S5) der Teilmenge von einem von dem Fahrzeug verschiedenen mobilen Endgerät abgerufen und in einer Speichereinrichtung des Fahrzeugs gespeichert wird (S2),
**dadurch gekennzeichnet, dass**
- zur Anpassung der Ausgabe an den Benutzer die bestimmten Häufigkeitswerte der Datensätze der Teilmenge hinsichtlich eines vorbestimmten Auswahlkriteriums überprüft werden (S7) und lediglich bei dessen Erfülltsein derjenige Datensatz aus der Teilmenge mit dem größten Häufigkeitswert als VIP-Datensatz bestimmt (S9) und bei der Ausgabe an den Benutzer markiert und/oder vorausgewählt wird (S11), wobei
- das Auswahlkriterium (S7) ist, ob ein Relativwert größer ist als ein vorgegebener Schwellwert, wobei der Relativwert gebildet wird durch ein Verhältnis des größten Häufigkeitswerts zu dem zweitgrößten Häufigkeitswert oder durch ein Verhältnis des größten Häufigkeitswerts zu einer Summe aller Häufigkeitswerte der Datensätze der Teilmenge.

2. Verfahren nach einem der vorhergehenden Ansprüche,
**dadurch gekennzeichnet, dass**
nach der Bestimmung (S9) des VIP-Datensatzes mittels der Ausgabeeinrichtung eine Sprachanfrage an den Benutzer ausgegeben wird (S12) zur Abfrage, ob der gewünschte Datensatz markiert und/oder vorausgewählt wurde.

3. Verfahren nach Anspruch 2,
**dadurch gekennzeichnet, dass**
- nach der Bestimmung (S9) des VIP-Datensatzes, falls mit diesem mehr als eine Telefonnummer verknüpft ist, für alle mit dem VIP-Datensatz verknüpften Telefonnummern eine jeweilige Verwendungshäufigkeit der Telefonnummer ermittelt (S10), und
- mit der Sprachanfrage (S12) zusätzlich abgefragt wird, ob die Telefonnummer mit der größten Verwendungshäufigkeit bei einer Verarbeitung der Benutzereingabe verwendet werden soll.

4. Verfahren nach einem der vorhergehenden Ansprüche,
**dadurch gekennzeichnet, dass**
die Teilmenge von Datensätzen als Liste ausgegeben wird (S11), wobei der VIP-Datensatz als erstes Listenelement und nachfolgend die übrigen Datensätze der Teilmenge alphabetisch sortiert ausgegeben werden.

5. Verfahren nach einem der vorhergehenden Ansprüche,
**dadurch gekennzeichnet, dass**
als Obermenge von Datensätzen eine Anrufliste verwendet wird, welche Informationen zu ausgehenden und/oder eingehenden Anrufen enthält.

6. Verfahren nach einem der vorhergehenden Ansprüche,
**dadurch gekennzeichnet, dass**
die Obermenge von Datensätzen bei oder nach jedem Verbinden (S1) des mobilen Endgeräts mit dem Fahrzeug jeweils nur einmalig abgerufen wird (S2).

7. Kraftfahrzeug mit einer Datenverarbeitungseinrichtung und einer über eine Datenverbindung mit dieser verbundenen Ausgabeeinrichtung zum Ausgeben (S11, S12) von Informationen an einen Benutzer,
**dadurch gekennzeichnet, dass**
das Kraftfahrzeug eine Datenschnittstelle zum Verbinden (S1) des Kraftfahrzeugs mit einem mobilen Endgerät aufweist, über welche zwischen der Datenverarbeitungseinrichtung und dem mobilen Endgerät Daten austauschbar, wobei das Kraftfahrzeug einen Datenspeicher mit einem von der Datenverarbeitungseinrichtung ausführbaren Programmcode aufweist, und dazu eingerichtet ist, bei einer Ausführung des Programmcodes durch die Datenverarbeitungseinrichtung ein Verfahren nach einem der vorhergehenden Ansprüche durchzuführen.

8. Kraftfahrzeug nach Anspruch 7,
**dadurch gekennzeichnet, dass**
das Kraftfahrzeug eine zum Erfassen der Benutzereingabe (S4) eingerichtete Eingabeeinrichtung aufweist, welche eine Mikrofoneinrichtung zum Erfassen (S4) akustischer Spracheingaben des Benutzers umfasst und welche über eine Datenverbindung mit der Datenverarbeitungseinrichtung verbunden ist.

9. Kraftfahrzeug nach einem der Ansprüche 7 und 8,
**dadurch gekennzeichnet, dass**
die Ausgabeeinrichtung umfasst
- eine Anzeigefläche zur visuellen Informationsdarstellung (S11) und
- eine Lautsprechereinrichtung zur akustischen Informationsausgabe (S12) und/oder eine Datenschnittstelle zum Übermitteln von Ausgabedaten an eine Lautsprechereinrichtung.

## Claims

1. Method for processing a user input, in which
- using a data processing device of a vehicle
• an evaluation of the user input is carried out (S4) and based on a result of the evaluation from a superset of person related datasets a subset appropriate for the user input is selected (S5),
• for each dataset of the subset a frequency value is determined (S6), which is equal to a number of previous usages of the dataset, and
- by means of an output device of the vehicle the subset of datasets adapted to the determined frequency values is outputted (S11) to the user,
- the superset of datasets prior to the selection (S5) of the subset is retrieved by a mobile end unit different from the vehicle and is saved (S2) in a storage device of the vehicle,
**characterised in that**
- for adapting the output to the user the determined frequency values of the datasets of the subset are checked with respect to a predetermined selection criterion (S7) and only when this is fulfilled the dataset from the subset with the greatest frequency value is determined as VIP-dataset (S9) and at the output to the user is marked and/or preselected (S11), wherein
- the selection criterion (S7) is, whether a relative value is greater than a predetermined threshold value, wherein the relative value is formed by a ratio of the greatest frequency value to the second greatest frequency value or by a ratio of the greatest frequency value to a total of all frequency values of the datasets of the subset.

2. Method according to one of the preceding claims,
**characterised in that**
after the determination (S9) of the VIP-dataset by means of the output device a voice query is outputted to the user (S12) for querying whether the desired dataset was marked and/or preselected.

3. Method according to claim 2
**characterised in that**
- after the determination (S9) of the VIP-dataset, in the case that more than one telephone number is linked therewith, for all telephone numbers linked with the VIP-dataset a respective usage frequency of the telephone number is determined (S10), and
- with the voice query (S12) is additionally queried whether the telephone number with the greatest usage frequency should be used at a processing of the user input.

4. Method according to one of the preceding claims
**characterised in that**
the subset of datasets is outputted (S11) as list, wherein the VIP-dataset is outputted as first list element and subsequently the remaining datasets of the subset alphabetically sorted are outputted.

5. Method according to one of the preceding claims
**characterised in that**
a call list is used as superset of datasets, said call list containing information with respect to outgoing and/or incoming calls.

6. Method according to one of the preceding claims
**characterised in that**
the superset of datasets at or after every connection (S1) of the mobile end unit with the vehicle is in each case retrieved (S2) only once.

7. Motor vehicle having a data processing device and an output device connected via a data connection therewith for outputting (S11, S12) information to a user, **characterised in that**
the motor vehicle has a data interface for connecting (S1) the motor vehicle with a mobile end unit, via which between the data processing device and the mobile end unit data exchangeable, wherein the motor vehicle has a data storage with a program code executable by the data processing device and is configured, at an execution of the program code by the data processing device, to carry out the method according to one of the preceding claims.

8. Motor vehicle according to claim 7,
**characterised in that**
the motor vehicle has an input device configured for detecting the user input (S4), said input device comprising a microphone device for detecting (S4) acoustic voice inputs of the user and being connected via a data connection with the data processing device.

9. Motor vehicle according to one of claims 7 and 8,
**characterised in that**
the output device comprises
- a display surface for visual representation of information (S11) and
- a loudspeaker device for acoustic output of information (S12) and/or a data interface for transmitting output data to a loudspeaker device.

## Revendications

1. Procédé de traitement d'une entrée utilisateur, pour lequel
- au moyen d'un dispositif de traitement de données d'un véhicule
• une évaluation de l'entrée utilisateur est réalisée (S4) et sur la base d'un résultat de l'évaluation à partir d'un ensemble de jeux de données personnelles un sous-ensemble adapté à l'entrée utilisateur est sélectionné (S5),
• pour chaque jeu de données du sous-ensemble une valeur de fréquence est déterminée (S6), laquelle correspond à un nombre d'utilisations jusqu'à présent du jeu de données, et
- au moyen d'un dispositif de sortie du véhicule le sous-ensemble de jeux de données est émis de manière adaptée aux valeurs de fréquence déterminées (S11) à l'utilisateur,
- l'ensemble de jeux de données est appelé avant la sélection (S5) du sous-ensemble par un terminal mobile différent du véhicule et est enregistré (S2) dans un dispositif de mémorisation du véhicule,
**caractérisé en ce que**
- pour l'adaptation de la sortie à l'utilisateur les valeurs de fréquence déterminées des jeux de données du sous-ensemble sont vérifiées (S7) en ce qui concerne un critère de sélection prédéterminé et justement lorsque celui-ci est rempli, le jeu de données est déterminé (S9) à partir du sous-ensemble avec la valeur de fréquence la plus grande en tant que jeu de données VIP et pour l'émission à l'utilisateur est marqué et/ou présélectionné (S11), dans lequel
- le critère de sélection (S7) est si une valeur relative est plus grande qu'une valeur seuil prescrite, dans lequel la valeur relative est formée par un rapport de la plus grande valeur de fréquence à la deuxième plus grande valeur de fréquence ou par un rapport de la plus grande valeur de fréquence à une somme de toutes les valeurs de fréquence des jeux de données du sous-ensemble.

2. Procédé selon l'une quelconque des revendications précédentes,
**caractérisé en ce que**
après la détermination (S9) du jeu de données VIP au moyen du dispositif de sortie une requête vocale est émise (S12) à l'utilisateur pour demander si le jeu de données souhaité a été marqué et/ou présélectionné.

3. Procédé selon la revendication 2
**caractérisé en ce que**
- après la détermination (S9) du jeu de données VIP si plus d'un numéro de téléphone est relié à celui-ci, pour tous les numéros de téléphone reliés au jeu de données VIP une fréquence d'utilisation respective du numéro de téléphone est déterminée (S10), et
- avec la requête vocale (S12) il est demandé en outre si le numéro de téléphone avec la plus grande fréquence d'utilisation doit être utilisé pour un traitement de l'entrée utilisateur.

4. Procédé selon l'une quelconque des revendications précédentes,
**caractérisé en ce que**
le sous-ensemble de jeux de données est émis (S11) en tant que liste, dans lequel le jeu de données VIP est émis trié alphabétiquement en tant que premier élément de liste et ensuite le jeux de données restant du sous-ensemble.

5. Procédé selon l'une quelconque des revendications précédentes,
**caractérisé en ce que**
en tant qu'ensemble de jeux de données une liste d'appel est utilisée, laquelle contient des informations pour des appels sortants et/ou entrants.

6. Procédé selon l'une quelconque des revendications précédentes,
**caractérisé en ce que**
l'ensemble de jeux de données est appelé (S2) lors ou après chaque liaison (S1) du terminal mobile avec le véhicule respectivement seulement une fois.

7. Véhicule automobile avec un dispositif de traitement de données et un dispositif de sortie raccordé à celui-ci par une liaison de données pour l'émission (S11, S12) d'informations à un utilisateur,
**caractérisé en ce que**
le véhicule automobile présente une interface de données pour la liaison (S1) du véhicule automobile avec un terminal mobile, par laquelle des données peuvent échangées entre le dispositif de traitement de données et le terminal mobile, dans lequel le véhicule automobile présente une mémoire de données avec un code de programme réalisable par le dispositif de traitement de données, et est conçu afin de réaliser lors de la réalisation du code de programme par le dispositif de traitement de données un procédé selon l'une quelconque des revendications précédentes.

8. Véhicule automobile selon la revendication 7,
**caractérisé en ce que**
le véhicule automobile présente un dispositif d'entrée conçu pour la détection de l'entrée utilisateur (S4) qui comporte un dispositif de microphone pour la détection (S4) d'entrées vocales acoustiques de l'utilisateur et qui est relié par une liaison de données avec le dispositif de traitement de données.

9. Véhicule automobile selon l'une quelconque des revendications 7 et 8,
caractérisé en en ce que
le dispositif de sortie comporte
- une surface d'affichage pour la représentation d'informations visuelle (S11) et
- un dispositif de haut-parleur pour la sortie d'informations acoustique (S12) et/ou une interface de données pour la transmission de données de sortie à un dispositif de haut-parleur.
